(19) Europäisches Patentamt
European Patent Office
Office européen des brevets

(11) EP 2 045 859 A1

(12) **EUROPEAN PATENT APPLICATION**
published in accordance with Art. 153(4) EPC

(43) Date of publication:
**08.04.2009 Bulletin 2009/15**

(21) Application number: **07767374.7**

(22) Date of filing: **15.06.2007**

(51) Int Cl.:
***H01M 4/88*** *(2006.01)* ***B01J 23/42*** *(2006.01)*
***B01J 37/02*** *(2006.01)* ***B01J 37/34*** *(2006.01)*
***H01M 4/86*** *(2006.01)* ***H01M 4/96*** *(2006.01)*
***H01M 8/10*** *(2006.01)*

(86) International application number:
**PCT/JP2007/062549**

(87) International publication number:
**WO 2007/148765 (27.12.2007 Gazette 2007/52)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.06.2006 JP 2006168284**

(71) Applicant: **Toyota Jidosha Kabushiki Kaisha**
**Toyota-shi, Aichi 471-8571 (JP)**

(72) Inventors:
- **KAWAMURA, Tetsuo**
**Toyota-shi, Aichi 471-8571 (JP)**
- **TAKAHASHI, Hiroaki**
**Toyota-shi, Aichi 471-8571 (JP)**
- **MAEDA, Yasuaki**
**Sakai-shi, Osaka 599-8531 (JP)**
- **NISHIMURA, Rokuro**
**Sakai-shi, Osaka 599-8531 (JP)**
- **OKITSU, Kenji**
**Sakai-shi, Osaka 599-8531 (JP)**

(74) Representative: **May, Mark Andrew**
**Kuhnen & Wacker,**
**Patent-und Rechtsanwaltsbüro**
**Prinz-Ludwig-Strasse 40A**
**85354 Freising (DE)**

# (54) METHOD FOR MANUFACTURING ELECTRODE CATALYST FOR FUEL CELL, ELECTRODE CATALYST FOR FUEL CELL, AND SOLID POLYMER ELECTROLYTE FUEL CELL COMPRISING THE SAME

(57) A method for producing an electrode catalyst for a fuel cell, including: an immersion step (step A) for immersing one or more selected from a catalyst component, a carrier of conductive particles, and a polymer electrolyte in a solvent; a catalyst loading step (step B) for loading the catalyst component on the carrier; and a reaction site forming step (step C) for depositing the polymer electrolyte onto the catalyst-loaded carrier, **characterized by** irradiating ultrasonic waves in at least one of steps A, B, and C. In the present invention, by suppressing a catalyst from being loaded inside the pores of a carrier, a method for producing an electrode catalyst for a fuel cell which increases the utilization rate of a noble metal catalyst and which improves power generation performance, an electrode catalyst for a fuel cell, and a solid polymer fuel cell provided therewith which can obtain high cell output can be obtained.

Fig. 1

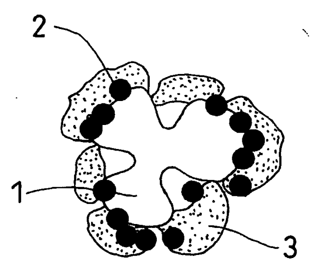


EP 2 045 859 A1

## Description

### Technical Field

The present invention relates to a method for loading a catalyst which increases the utilization rate of a noble metal catalyst and which increases power generation performance, a catalyst for a fuel cell cathode, a production method thereof, and a solid polymer fuel cell comprising the same.

Solid polymer fuel cells having a polymer electrolyte membrane can be easily reduced in size and weight, and are thus expected to be put into practical use as a power source in moving vehicles such as electric automobiles, and in compact cogeneration systems. However, solid polymer fuel cells have a comparatively low operating temperature, which makes it difficult to effectively utilize their exhaust heat for auxiliary drive power and the like. Thus, for practical use of such solid polymer fuel cells, there is a need for performance capable of obtaining high power generation efficiency and high output density under operating conditions of a high anode reaction gas (pure hydrogen etc.) utilization rate and a high cathode reaction gas (air etc.) utilization rate.

The cathode catalyst layer of a solid polymer fuel cell is mainly composed of a carrier, such as carbon black particles, which supports an active component such as Pt, and a proton-conducting electrolyte. Externally-supplied oxygen, protons conducted through the electrolyte in the catalyst layer from the anode via an electrolyte membrane, and electrons conducted through the carbon from the anode via an external circuit cause a cathode reaction to occur on the active component such as Pt, whereby power is generated. Thus, the electrode reactions at the respective catalyst layers of the anode and the cathode of a solid polymer fuel cell proceed at a three-phase boundary (hereinafter, referred to as "reaction site") where the respective reaction gas, catalyst, and fluorinated ion exchange resin (electrolyte) are simultaneously present.

Here, the active component particles of, for example, Pt which are supported inside the pores of the carrier, such as carbon black particles, could not sufficiently contact the electrolyte, so the cathode reaction did not occur adequately. Specifically, many of the carrier carbon black particles have a pore size of 5 nm or less, so that many of the active component particles of, for example, Pt are loaded inside the pores. In contrast, the electrolyte component in the catalyst layer has an average size of 5 nm or more. Thus, the catalyst metal supported inside the pores of the carrier cannot sufficiently contact the electrolyte, which means that not only are reaction sites not produced sufficiently inside the pores of the carrier, but a decrease in the utilization rate of the noble metal Pt is also brought about.

Accordingly, JP Patent Publication (Kokai) No. 2005-190726 A, which is directed to obtaining a catalyst-loaded electrode that exhibits high catalytic activity for a long period of time, discloses an invention of a catalyst-loaded electrode which includes an electrode catalyst having catalyst metal fine particles composed of platinum or a platinum alloy on a conductive carrier and an electrolyte polymer, wherein the electrode catalyst is a mixture of an electrode catalyst A, in which the catalyst metal fine particles are not supported inside the pores of the conductive carrier, and an electrode catalyst B, in which the catalyst metal fine particles are supported inside the pores of the conductive carrier. As a method for producing this electrode catalyst A, in which the catalyst metal fine particles are not supported inside the pores of the conductive carrier, JP Patent Publication (Kokai) No. 2005-190726 A describes adding a catalyst metal ion insolublizing agent to a reversed micellar solution containing an aqueous solution of catalyst metal ions inside the micelles, and depositing the formed catalyst metal on the surface of a conductive carrier.

On the other hand, one of the problems in realizing the practical use of polymer electrolyte fuel cells is material costs. One way to resolve this is to decrease the amount of the noble metal platinum. Conventionally, to manifest higher power generation performance by increasing the number of reaction sites, it was necessary to use a larger amount of platinum to react a higher level of oxygen. This the reason for increased costs due to an increased amount of platinum used.

### Disclosure of the Invention

However, not only is it unclear why the catalyst-loaded electrode disclosed in JP Patent Publication (Kokai) No. 2005-190726 A combines an electrode catalyst A, in which the catalyst metal fine particles are not supported inside the pores of the conductive carrier, with an electrode catalyst B, in which the catalyst metal fine particles are supported inside the pores of the conductive carrier, but there is also the problem that production of the electrode catalyst A is complex.

It is an object of the present invention to provide a method for loading a catalyst for a fuel cell which increases the utilization rate of a noble metal catalyst and which improves power generation performance, by suppressing the catalyst from being loaded inside the pores of a carrier.

The present inventors discovered that the since the size of catalyst metal particles is smaller than the pore size of a carrier, many catalyst metal particles are deposited deep inside the pores and do not participate in the cathode reaction. The present inventors discovered that by carrying out a specific treatment during the production steps of the electrode catalyst, the catalyst metal could be suppressed from being loaded inside the pores of the carrier, and thus the above problems could be resolved, thereby arriving at the present invention.

Specifically, first, the present invention is an invention of a method for producing an electrode catalyst for a fuel cell, including an immersion step (step A) for immersing one or more selected from a catalyst component, a carrier of conductive particles, and a polymer electrolyte in a solvent, a catalyst loading step (step B) for loading the catalyst component on the carrier, and a reaction site forming step (step C) for depositing the polymer electrolyte onto the catalyst-loaded carrier, the method being characterized by irradiating ultrasonic waves in at least one of steps A, B, and C. The irradiation of ultrasonic waves may be carried out in any one or more of the above-described steps. By irradiating with ultrasonic waves, the catalyst component, the carrier of conductive particles, and the polymer electrolyte can have improved dispersibility or be turned into smaller particles, so that the number of sites participating in the three-phase reaction is increased. As a result, the amount of catalyst metal not participating in the three-phase reaction decreases, so that the utilization rate of the catalyst metal such as platinum improves and the power generation performance improves.

Especially, the catalyst component can be loaded on the carrier by using ultrasonic waves in step B. The reductive loading of the catalyst component by irradiation of ultrasonic waves is carried out by ultrasonic cavitation. Reductive radicals are extracted from the water or alcohol in the electrode catalyst solution by the ultrasonic waves. These reductive radicals reduce the catalyst component, so that particles of the catalyst metal are supported on the carrier. At this stage, although most of the carrier has an average pore size of 5 nm or less, the average particle size of the agglomerates in the catalyst component and the particle size of the cavities produced by the ultrasonic waves are several tens of nm. Thus, a reduction reaction does not occur inside the pores of the carrier, and the reduction reaction preferentially proceeds mainly at the carrier surface, so that the reduced catalyst metal is also preferentially supported on the carrier surface. As a result, the amount of catalyst metal not participating in the three-phase reaction decreases, so that the three-phase reaction intensively proceeds at the carrier surface, whereby the utilization rate of the catalyst metal such as platinum improves and the power generation performance improves.

Preferred examples of specific aspects of the method for producing an electrode catalyst for a fuel cell according to the present invention include the following (1) to (4).

(1) In step A, after immersing a carrier in the solvent, irradiating ultrasonic waves on a dispersion composed of the carrier and the solvent.

(2) In step B, after immersing a catalyst-loaded carrier loaded with a catalyst component in the solvent, irradiating ultrasonic waves on a dispersion composed of the catalyst-loaded carrier and the solvent.

(3) In step B, while irradiating ultrasonic waves on an electrode catalyst dispersion composed of at least a catalyst component, a carrier, and the solvent, loading the catalyst component on the carrier.

(4) In step C, immersing at least a carrier loaded with a catalyst and a polymer electrolyte solution in the solvent to form a catalyst ink, then irradiating ultrasonic waves on the catalyst ink composed of the catalyst-loaded carrier and the solvent.

The method for producing an electrode catalyst for a fuel cell according to the present invention is characterized by carrying out an ultrasonic treatment during the production steps. As the frequency of the used ultrasonic waves, 20 kHz to 1,000 kHz is preferred, and 100 kHz to 500 kHz is more preferred.

In the method for producing an electrode catalyst for a fuel cell according to the present invention, materials that are well known as the starting materials for a solid polymer fuel cell may be widely used for the catalyst component, which is the starting material of the electrode catalyst, the carrier of conductive particles, and the polymer electrolyte. A specific preferred example for the carrier is carbon black.

Further, in terms of the relationship with the reduced/supported metal catalyst particle size, the average pore size of the carrier used in the method for producing an electrode catalyst according to the present invention is preferably 5 nm or less.

In the method for producing an electrode catalyst according to the present invention, a preferred example of the electrode catalyst solution composed of at least a catalyst component, a carrier, and a solvent is an aqueous solution composed of catalyst component ions, carrier particles, an alcohol, and a surfactant.

The carrier used in the method for producing an electrode catalyst according to the present invention has certain pores, and a conductive carrier is especially preferred. Among such carriers, a preferred example is carbon black.

Second, the present invention is an electrode catalyst for a fuel cell produced by the above-described production method.

Specifically, the electrode catalyst for a fuel cell according to the present invention can be expressed by the following (1) or (2).

(1) An electrode catalyst for a fuel cell having a catalyst layer composed of a carrier loaded with a catalyst and a polymer electrolyte, characterized in that the percent decrease in volume of 5 mn or less pores of the carrier loaded with 2 wt% catalyst is 5.0 to 15% with respect to the corresponding pore volume before the catalyst loading.

(2) An electrode catalyst for a fuel cell having a catalyst layer composed of a carrier loaded with a catalyst and a polymer electrolyte, characterized in that the percent decrease in specific surface area of the carrier loaded with 2 wt% catalyst is 5.0 to 15% with respect to the corresponding pore volume before the catalyst loading.

A 5.0 to 15% decrease in pore volume of the carrier after catalyst loading expresses the fact that preferential deposition of the reduced catalyst metal on the carrier surface is indicated by such a level of percent decrease in pore volume of the carrier. Specifically, when the percent decrease in pore volume of the carrier on which a catalyst has been supported is 5.0 to 15%, loading the catalyst metal inside the pores of the carrier is preferably suppressed, so that a cathode catalyst for a fuel cell having an increased utilization rate of the noble metal catalyst and improved power generation performance can be obtained.

As in the percent decrease in volume of the pores, a 5.0 to 15% decrease in specific surface area of the carrier after a catalyst loading, which characterizes the present invention from a different perspective, expresses the fact that preferential deposition of the reduced catalyst metal on the carrier surface is indicated by such a level of percent decrease in specific surface area of the carrier. Specifically, when the percent decrease in the specific surface area of the carrier on which a catalyst has been supported is 5.0 to 15%, loading the catalyst metal inside the pores of the carrier is preferably suppressed, so that a cathode catalyst for a fuel cell having an increased utilization rate of the noble metal catalyst and improved power generation performance can be obtained.

In the present invention, the use of 2 wt% catalyst loading in determining the percent decrease in volume of 5 nm or less pores of the carrier and the percent decrease in specific surface area of the carrier is based on the following. Since the reductive loading level of catalyst component attainable by ultrasonic cavitation greatly varies depending on conditions such as reaction time and the like, considering conditions found to be actually applicable in the laboratory "2 wt% catalyst loading" was tentatively selected. Therefore, the present invention is not limited to loading 2 wt% of catalyst. Further, loading 2 wt% of catalyst is not a technical standard in implementing the fuel cell.

As a result of the catalyst component having a higher dispersibility or being turned into fine particles, the percent decrease in the volume of pores which are 5 nm or less of the carrier and the percent decrease in the specific surface area of the carrier are as described above. Further, the electrode catalyst according to the present invention is characterized by being preferentially supported on the surface of the carrier as compared rather than inside the pores of the carrier.

The electrode catalyst for a fuel cell according to the present invention can be used in a cathode electrode and in an anode electrode, although it is especially preferred as a catalyst for a cathode electrode.

Third, the present invention is an invention of a solid polymer fuel cell having an anode, a cathode, and a polymer electrolyte membrane provided between the anode and the cathode, characterized in that the solid polymer fuel cell includes the electrode catalyst for a fuel cell described in any of the above as the cathode catalyst and/or anode catalyst.

The solid polymer fuel cell according to the present invention decreases the amount of catalyst metal not participating in the three-phase reaction, so that the three-phase reaction intensively proceeds at the carrier surface, whereby the utilization rate of the catalyst metal such as platinum improves and the power generation performance improves.

According to the present invention, by irradiating with ultrasonic waves, the catalyst component, the carrier of conductive particles, and the polymer electrolyte can have improved dispersibility or be turned into fine particles, so that the number of sites participating in the three-phase reaction is increased. As a result, the amount of catalyst metal not participating in the three-phase reaction decreases, so that the utilization rate of the catalyst metal such as platinum improves and the power generation performance improves. Specifically, the present invention is as follows.

(1) By immersing conductive particles in a solvent such as water, then irradiating with high-frequency ultrasonic waves of 20 kHz to 1,000 kHz (preferably 100 kHz to 500 kHz) for 30 minutes or more, and then loading a noble metal, the dispersibility of the conductive particles can be increased, the Pt utilization rate can be improved, and the power generation performance can be improved. As a result, the high-cost noble metal can be utilized effectively.

(2) By immersing conductive particles loaded with a noble metal in a solvent such as water, then irradiating with high-frequency ultrasonic waves of 20 kHz to 1,000 kHz (preferably 100 kHz to 500 kHz) for 30 minutes or more, the dispersibility of the conductive particles and of the Pt can be increased, the average Pt particle size can be decreased, the Pt utilization rate can be improved, and the power generation performance can be improved. As a result, the high-cost noble metal can be utilized effectively.

(3) By immersing conductive particles loaded with a noble metal and an electrolyte solution in a solvent such as water, then irradiating the conductive particles with high-frequency ultrasonic waves of 20 kHz to 1,000 kHz (preferably 100 kHz to 500 kHz) for 30 minutes or more, the compatibility among the electrolyte, the conductive particles, and the Pt is improved, and the dispersibility of the conductive particles and of the Pt can be increased, so that the Pt utilization rate can be improved, and the power generation performance can be improved. As a result, the high-cost noble metal can be utilized effectively.

(4) In the case of irradiating ultrasonic waves on an electrode catalyst solution at least composed of a catalyst component, a carrier, and a solvent, a reduction reaction does not occur inside the pores of the carrier, and the reduction reaction preferentially proceeds mainly at the carrier surface, so that the reduced catalyst metal is also preferentially supported on the carrier surface. As a result, the amount of catalyst metal not participating in the three-phase reaction decreases, so that the three-phase reaction intensively proceeds at the carrier surface, whereby the utilization rate of the catalyst metal such as platinum improves and the power generation performance improves.

According to the present invention, by using the simple method of ultrasonic irradiation, the dispersibility of the catalyst starting component can be improved and fine particles can be formed, and the catalyst can be suppressed from being loaded inside the pores of the carrier, which enables a method for supporting a catalyst for a fuel cell to be obtained in which the utilization rate of the noble metal catalyst is increased and the power generation performance is improved.

Brief Description of the Drawings

Figure 1 illustrates a schematic diagram of Pt-loaded carbon and an electrolyte according to the method for supporting a catalyst of the present invention.

Figure 2 illustrates a schematic diagram of Pt-loaded carbon and an electrolyte according to a conventional method for supporting a catalyst.

Figure 3 illustrates the voltage-current density curves of Example 1 and Comparative Example 1.

Figure 4 illustrates an $H_2$ desorption curve according to CV (cyclic voltammetry) for calculating the electrochemically effective Pt surface area ($cm^2/cm^2$).

Figure 5 illustrates the voltage-current density curves of Example 2 (ultrasonic irradiation on a carrier dispersion) and Comparative Example 3.

Figure 6 illustrates the voltage-current density curves of Example 3 (ultrasonic irradiation on a dispersion of a noble metal-loaded carrier) and Comparative Example 4.

Figure 7 illustrates the voltage-current density curves of Example 4 (ultrasonic irradiation on a catalyst ink) and Comparative Example 5.

The respective reference numerals are as follows.

1: Carrier, 2: Pt supported on a surface of the carrier 1, 3: Electrolyte, 4: Pt supported inside the pores of carrier 1.

Best Mode for Carrying Out the Invention

Preferred embodiments of the method for producing an electrode catalyst (including the method for supporting a catalyst), an electrode catalyst, and a solid polymer fuel cell equipped therewith according to the present invention will now be described below.

First, the effects of the present invention will be schematically illustrated by using as an example the case where in step B, while ultrasonic waves are irradiated on an electrode catalyst dispersion composed of at least a catalyst component, a carrier, and a solvent, the catalyst component is supported on the carrier.

Figure 2 illustrates a schematic diagram of Pt-loaded carbon and an electrolyte according to a conventional method for supporting a catalyst. Although there are pores whose average size is 5 nm or less on the carrier 1 carbon, because the catalyst component Pt particles have an even smaller average size, the Pt particles are supported not only on the surface of the carrier 1, but also inside the pores. The Pt 2 supported on the surface of the carrier 1 forms along with the electrolyte 3 a three-phase boundary (reaction site), and acts effectively as a catalyst. However, the Pt 4 supported inside the pores of the carrier 1 does not come into contact with the electrolyte 3 or the oxidizing gas, does not form a three-phase boundary (reaction site), and does not act effectively as a catalyst.

Figure 1 illustrates a schematic diagram of Pt-loaded carbon and an electrolyte according to the method for supporting a catalyst of the present invention, in which reductive loading of the catalyst component is carried out by ultrasonic cavitation. At this stage, although most of the carrier 1 has an average pore size of 5 nm or less, the average particle size of the agglomerates in the catalyst component and the particle size of the cavities produced by the ultrasonic waves are several tens of nm. Thus, a reduction reaction does not occur inside the pores of the carrier 1, and the reduction reaction preferentially proceeds mainly at the carrier surface, so that the reduced Pt is also preferentially supported on the carrier surface. The Pt 2 supported on the surface of the carrier forms along with the electrolyte 3 a three-phase boundary (reaction site), and acts effectively as a catalyst. As a result, the amount of Pt not participating in the three-phase reaction decreases, so that the three-phase reaction intensively proceeds at the carrier surface, whereby the utilization rate of the Pt improves and the power generation performance improves.

The present inventors discovered that by using ultrasonic cavitation, the catalyst component has an increased dispersibility and can be turned into fine particles, so that the reductive loading of especially the catalyst component preferentially proceeds mainly at the carrier surface. Further, the present inventors also discovered that the catalyst component is preferentially supported mainly on the carrier surface, and that there is a correlation in the percent decrease in pore volume of the carrier after the catalyst has been supported and the percent decrease in the specific surface area of the carrier after the catalyst has been supported.

In the present invention, although the carrier on which the catalyst is supported is not especially limited, a carbon material having a specific surface area of 200 $m^2/g$ or more is preferred. For example, carbon black, activated carbon and the like can be preferably used.

Further, as the polymer electrolyte contained in the catalyst layer according to the present invention, a fluorinated ion exchange resin is preferred, and a sulfonic acid type perfluorocarbon polymer is especially preferred. A sulfonic acid type perfluorocarbon polymer enables proton conduction in the cathode which is chemically stable over a long period of time and fast.

Further, the layer thickness of the catalyst layer of the cathode according to the present invention may be the same as that for a typical gas diffusion electrode, preferred is 1 to 100 $\mu$m, and more preferred is 3 to 50 $\mu$m.

In a solid polymer fuel cell, usually, since the overvoltage of the cathode oxygen reduction reaction is much larger than the overvoltage of the anode hydrogen oxidation reaction, improving the electrode characteristics of the cathode by, as described above, supporting the catalyst in the catalyst layer of the cathode on the carrier surface, and effectively utilizing these reaction sites, is very effective in improving the output characteristics of a fuel cell.

On the other hand, the structure of the anode is not especially limited. The anode may have, for example, a well-known gas diffusion electrode structure.

Further, the polymer electrolyte membrane used in the solid polymer fuel cell according to the present invention is not especially limited so long as it is an ion exchange membrane which exhibits good ion conductivity in a wet state. Examples of the solid polymer material constituting the polymer electrolyte membrane include a perfluorocarbon polymer having a sulfonic acid group, a polysulfone resin, a perfluorocarbon polymer having a phosphonic acid group or a carboxylic acid group and the like. Among these, a sulfonic acid type perfluorocarbon polymer is preferred. This polymer electrolyte membrane may be composed of the same resin as the fluorinated ion exchange resin contained in the catalyst layer, or may be composed of a different resin.

In the present invention, the catalyst layer can be produced using a coating solution in which a carrier, a polymer electrolyte, and a catalyst composed of a noble metal component are dissolved or dispersed in a solvent or a dispersion medium. Here, examples of the solvent or dispersion medium which can be used include alcohols, fluorinated alcohols, and fluorinated ethers. Further, the catalyst layer can be formed by coating the coating solution on carbon cloth or the like which will form the ion exchange membrane or gas diffusion layer. In addition, the catalyst layer may be formed on the ion exchange membrane also by coating the above-described coating solution on a separately-prepared substrate to form a coating layer, and transferring this onto the ion exchange membrane.

Here, when the catalyst layer is formed on the gas diffusion layer, it is preferred to bond the catalyst layer and the ion exchange membrane together by adhesion or by hot pressing. Further, when the catalyst layer is formed on the ion exchange membrane, the cathode may be constituted by only the catalyst layer, or the cathode may be constituted also with the gas diffusion layer disposed adjacent to the catalyst layer.

A separator formed with the usual gas channels is provided on the outer side of the cathode. The solid polymer fuel cell is configured so that the gas containing hydrogen is fed to the anode and the gas containing oxygen is fed to the cathode in these channels.

## Examples

The electrode catalyst and the solid polymer fuel cell produced by the present invention will now be described in more detail with the following examples and comparative examples.

(Example 1: Ultrasonic treatment when supporting a catalyst)

[Catalyst powder preparation]

A catalyst powder with Pt selectively loaded on the surface of a carbon black powder was prepared according to the following procedures.

(1) 0.585 g of a carbon black powder (Ketjen EC) was suspended in water.

(2) $H_2PtCl_6 \cdot 6H_2O$ in 2-propanol (1 mL) was dissolved in (1), to form a 60 mL solution. This solution was charged into a glass vessel (bottom thickness 1 mm) (Pt: equivalent to 1 mM).
(3) Ar gas was bubbled through the solution to remove oxygen and the like from the solution (30 min).
(4) The vessel was set on an ultrasonic transducer (distance between the transducer and the vessel bottom was 4 mm).
(5) 200 kHz ultrasonic waves were irradiated (solution temperature was 20°C).
(6) The irradiation was finished after 4 hours. This is a sufficient time for the Pt reduction.
(7) The solution was washed with water, filtered, dried, and then the resultant product was crushed to obtain a 2% Pt/C powder catalyst.

(Comparative Example 1)

A catalyst powder with Pt loaded on a carbon black powder was prepared according to the following conventional procedures.

(1) 0.585 g of carbon black powder (Ketjen EC) was suspended in water.
(2) $H_2PtCl_6 \cdot 6H_2O$ in 2-propanol (1 mL) was dissolved in (1), to form a 60 mL solution. This solution was charged into a glass vessel (bottom thickness 1 mm) (Pt: equivalent to 1 mM).
(3) Ar gas was bubbled through the solution to remove oxygen and the like from the solution (30 min).
(4) The solution was kept for 4 hours at 88°C under reflux.
(5) The solution was washed with water, filtered, dried, and then the resultant product was crushed to obtain a 2% Pt/C powder catalyst.

[Results]

The volume of pores of 5 nm or less and the specific surface area of the powder catalysts of Example 1 and Comparative Example 1, and of an untreated carbon black powder (Ketjen EC) for Comparative Example 2, were measured. The results are shown in Table 1.

Table 1

| | Volume of pores of 5 nm or less (cc/g) | Percent decrease in pore volume (%) | Specific surface area SSA ($m^2/g$) | Percent decrease in specific surface area (%) |
|---|---|---|---|---|
| Comparative Example 2 | 0.273 | - | 850 | - |
| Example 1 | 0.245 | 10.3 | 720 | 15.3 |
| Comparative Example 1 | 0.230 | 15.6 | 650 | 23.5 |

From the results of Table 1, it can be seen that for the carbon loaded with 2 wt% of Pt, Example 1 of the present invention had a volume of pores of 5 nm or less (cc/g) of about 5% or more than the conventional Comparative Example 1. Specifically, this shows that the pores were not filled with Pt. Similarly, the percent decrease in specific surface area SSA ($m^2/g$) was also lower, showing that the pores were not filled with Pt.

[Casting (Catalyst Layer Formation) and MEA Fabrication]

Using the catalyst powders prepared by the above methods, casting (catalyst layer formation) and MEA fabrication were carried out according to the following procedures.

(1) Ion exchange water, an electrolyte solution (Nafion), ethanol, and propylene glycol were mixed in predetermined amounts into a catalyst powder which had been thoroughly mechanically crushed, to produce a catalyst ink having a Nafion/Carbon weight of 1.
(2) The catalyst ink was stirred for 30 min using an ultrasonic homogenizer, and then stirred for 15 min using a magnetic stirrer. This operation was repeated 3 times.

(3) The catalyst ink was cast to a film thickness of 6 mil on a Teflon® resin membrane, dried, and then cut into 1 $cm^2$ squares.

(4) The electrolyte membrane was hot-pressed to produce a MEA.

(5) The MEA was attached to a cell, and cell performance and Pt utilization rate were evaluated according to the following items.

[Cell Performance Evaluation Method]

The following power generation evaluation tests for a single cell having an electrode area of 13 $cm^2$ were carried out.

Cathode film thickness: 6 mil

Gas flow:

Anode: $H_2$ 500 cc/min

Cathode: Air 1,000 cc/min

Humidification temperature:

Anode bubbling: 90°C

Cathode bubbling: 75°C

Pressure:

Anode: 0.2 MPa

Cathode: 0.2 MPa

Cell temperature: 80°C

Current density and cell voltage were measured under the above conditions. Here, the supported catalyst amount was 2 wt% Pt, the Pt particle size was 1.5 nm, and the Pt mass per unit area was 0.0041 mg/$cm^2$. In contrast, for the comparative example, the supported catalyst amount was 2 wt% Pt, the Pt particle size was 1.5 nm, and the Pt mass per unit area was 0.0048 mg/$cm^2$. Thus, the example according to the present invention and the conventional Comparative Example 1 had almost the same Pt mass per unit area, and the Pt particle size was tested under almost the same conditions. The results are shown in Table 3.

From the results of Table 3, it can be seen that Example 1 of the present invention had superior cell performance to that of Comparative Example 1.

[Pt Utilization Rate Evaluation Method]

The following power generation evaluation tests for a single cell having an electrode area of 13 $cm^2$ were carried out.

Cathode film thickness: 6 mil

Gas flow:

Anode: $H_2$ 500 cc/min

Cathode: $N_2$ 1,000 cc/min

Humidification temperature:

Anode bubbling: 90°C

Cathode bubbling: 75°C

Pressure:

Anode: 0.2 MPa
Cathode: 0.2 MPa

Cell temperature: 80°C

Under the above conditions, CV (cyclic voltammetry) was repeated 3 times, and the current and voltage were measured at the location where the second and third times almost matched. Here, (A) the electrochemically effective Pt specific surface area ($cm^2/cm^2$) was calculated from the $H_2$ desorption peak illustrated in Fig. 4, and then, (B) the Pt utilization rate (%) was calculated using the following formula by determining the geometric Pt surface area from the Pt particle size or Pt degree of dispersion (determined from CO pulsing).

$$\text{(B) Pt utilization rate (\%)} = \text{(Electrochemically effective Pt surface area)/(Geometric Pt surface area)} \times 100$$

The results are shown in Table 2.

Table 2

| | (A) Electrochemically effective Pt surface area ($cm^2/cm^2$) | (B) Pt utilization rate (%) |
|---|---|---|
| Example 1 | 0.21 | 3.4 |
| Comparative Example 1 | 0.09 | 1.3 |

From the results of Table 2, it can be seen that Example 1 of the present invention has a better Pt utilization rate than that of the conventional Comparative Example 1.
From the above, it can be seen that since the catalyst-loaded carrier according to the present invention has a high level of Pt supported on the surface, contact with the electrolyte is increased, so that the Pt utilization rate improves, whereby the cell performance also improves.

(Example 2: Ultrasonic irradiation on a carrier dispersion)

A catalyst powder with Pt selectively loaded on the surface of a carbon black powder and an MEA were prepared according to the following procedures.

(1) 0.585 g of carbon black was suspended in 760 cc of water.
(2) The mixture of (1) was irradiated with 200 kHz high-frequency ultrasonic waves for 4 hours.
(3) The mixture of (2) was filtered, dried, and crushed to obtain a powder. This powder was suspended in ion exchange water, and in the resultant mixture was dissolved reagent-grade chloroplatinic acid (based on the carbon, Pt was 2 wt% equivalent). Subsequently, this solution was kept at 80°C, and formic acid was added dropwise so that the Pt was loaded on the carbon by reduction.
(4) The mixture of (3) was filtered, dried, and crushed to obtain a powder. This powder was mixed with predetermined amounts of ion exchange water, an electrolyte solution (Nafion), ethanol, and propylene glycol to produce a catalyst ink (Nafion/Carbon weight of 1). Next, the catalyst ink was stirred (30 min) using an ultrasonic homogenizer, and then stirred (15 min) using a magnetic stirrer (repeated 3 times). Then, the catalyst ink was cast (film thickness of 6 mil) on a Teflon® resin membrane, dried, and cut into 13 $cm^2$ squares.
(5) The electrolyte membrane of (4) was hot-pressed to produce a MEA.
(6) The MEA was attached to a cell, and the cell performance was evaluated.

(Comparative Example 3)

(1) A carbon black powder was suspended in ion exchange water, and then made to dissolve (based on the carbon, Pt was 2 wt% equivalent). Subsequently, this solution was kept at 80°C, and formic acid was added dropwise so that the Pt was loaded on the carbon by reduction.

(2) The mixture of (1) was filtered, dried, and crushed to obtain a powder. This powder was mixed with predetermined amounts of ion exchange water, an electrolyte solution (Nafion), ethanol, and propylene glycol to produce a catalyst ink (Nafion/Carbon weight of 1). Next, the catalyst ink was stirred (30 min) in an ultrasonic homogenizer, and then stirred (15 min) with a magnetic stirrer (repeated 3 times). Then, the catalyst ink was cast (film thickness of 6 mil) on a Teflon® resin membrane, dried, and then cut into 13 $cm^2$ squares.
(3) The electrolyte membrane of (2) was hot-pressed to produce a MEA.
(4) The MEA was attached to a cell, and the cell performance was evaluated.

The cell performance evaluation and Pt utilization rate evaluation were carried out in the same manner as in Example 1, except that the humidification temperature was set at 75°C for the anode bubbling and 60°C for the cathode bubbling.

It should be noted that, in Example 2, the MEA was fabricated from a cathode electrode having a catalyst of 2 wt% Pt loaded on ultrasonicated carbon, with a Pt content of 0.0047 (mg/$cm^2$) per electrode unit surface area, and from an anode electrode commercially available Pt-loaded carbon. In Comparative Example 3, the MEA was fabricated from a cathode electrode having a catalyst of 2 wt% Pt loaded on non-treated carbon, with a Pt content of 0.0048 (mg/$cm^2$) per electrode unit surface area, and from an anode electrode commercially available Pt-loaded carbon.

The results are illustrated in Table 5. From this, it can be seen that compared with the electrode catalyst and MEA using a conventional carbon-supported catalyst which was not subjected to the high-frequency ultrasonic irradiation of (2), the electrode catalyst and MEA according to the present invention exhibited high power generation characteristics. Compared with the electrode catalyst and MEA using a conventional carbon-supported catalyst which was not subjected to the high-frequency ultrasonic irradiation of (2), it can be seen that the electrode catalyst and MEA according to the present invention had a high electrochemical Pt utilization rate. It is believed that the improvement in power generation characteristics was as a result of these effects. Specifically, for carbon supporting 2 wt% of Pt, the Pt utilization rate with an ultrasonic treatment was 40%, while the Pt utilization rate without a treatment was 0.3%.

(Example 3: Ultrasonic irradiation on a dispersion of a carrier loaded with a noble metal)

A catalyst powder with Pt selectively loaded on the surface of a carbon black powder and an MEA were prepared according to the following procedures.

(1) 0.585 g of a carbon black catalyst powder loaded with 2 wt% of Pt was suspended in 60 cc of water.
(2) The catalyst suspension of (1) was irradiated with 200 kHz high-frequency ultrasonic waves for 4 hours.
(3) The mixture of (2) was filtered, dried, and crushed to obtain a powder. This powder was mixed with predetermined amounts of ion exchange water, an electrolyte solution (Nafion), ethanol, and propylene glycol to produce a catalyst ink (Nation/Carbon weight of 1). Next, the catalyst ink was stirred (30 min) using an ultrasonic homogenizer, and then stirred (15 min) using a magnetic stirrer (repeated 3 times). Then, the catalyst ink was cast (film thickness of 6 mil) on a Teflon® resin membrane, dried, and then cut into 13 $cm^2$ squares.
(4) The electrolyte membrane of (3) was hot-pressed to produce a MEA.
(5) The MEA was attached to a cell, and the cell performance was evaluated.

(Comparative Example 4)

(1) 0.585 g of a carbon black catalyst powder loaded with 2 wt% of Pt was suspended in 60 cc of water, and the resultant mixture was mixed with predetermined amounts of ion exchange water, an electrolyte solution (Nafion), ethanol, and propylene glycol to produce a catalyst ink (Nafion/Carbon weight of 1). Next, the catalyst ink was stirred (30 min) in an ultrasonic homogenizer, and then stirred (15 min) with a magnetic stirrer repeatedly 3 times. Then, the catalyst ink was cast (film thickness of 6 mil) on a Teflon® resin membrane, dried, and cut into 13 $cm^2$ squares.
(2) The electrolyte membrane of (1) was hot-pressed to produce a MEA.
(3) The MEA was attached to a cell, and the cell performance was evaluated.

The cell performance evaluation was carried out in the same manner as in Example 1, except that the humidification temperature was set at 75°C for anode bubbling and 60°C for cathode bubbling.

Further, in Example 3, the MEA used for the cathode electrode a catalyst in which 2 wt% of Pt was loaded on ultrasonicated carbon, with a Pt content of 0.0041 (mg/$cm^2$) per electrode unit surface area, and for the anode electrode commercially available Pt-loaded carbon. In Comparative Example 4, the Pt content was 0.0048 (mg/$cm^2$) per electrode unit surface area, and commercially available Pt-loaded carbon was used for the anode electrode.

The results are illustrated in Table 6. From this, it can be seen that compared with the electrode catalyst and MEA using a conventional catalyst which was not subjected to the high-frequency ultrasonic irradiation of (2), the electrode catalyst and MEA according to the present invention exhibited high power generation characteristics. Further, compared with the conventional catalyst which was not subjected to the high-frequency ultrasonic irradiation of (2), it can be seen that the electrode catalyst according to the present invention had a high Pt dispersibility, and the average Pt particle size was small. It is believed that the improvement in power generation characteristics were due to these effects. Specifically, for carbon supported 2 wt% of Pt, the Pt particle size determined by CO pulse adsorption measurement was 0.89 nm with an ultrasonic treatment, and 1.53 nm without a treatment.

(Example 4: Ultrasonic irradiation on a catalyst ink)

A catalyst ink was prepared according to the following procedures.

(1) A carbon catalyst powder loaded with 45 wt% of Pt, and predetermined amounts of ion exchange water, an electrolyte solution (Nafion), ethanol, and propylene glycol were mixed to produce a catalyst ink (Nafion/Carbon weight of 1).
(2) The mixture of (1) was irradiated with 200 kHz high-frequency ultrasonic waves for 4 hours.
(3) The mixture of (2) was stirred (30 min) using a 28 kHz ultrasonic homogenizer, and then stirred (15 min) using a magnetic stirrer repeatedly 3 times. Then, the catalyst ink was cast (film thickness of 6 mil) on a Teflon® resin membrane, dried, and cut into 13 $cm^2$ squares.
(4) The electrolyte membrane of (3) was hot-pressed to produce a MEA.
(5) The MEA was attached to a cell, and the cell performance was evaluated.

(Comparative Example 5)

(1) 0.585 g of a carbon catalyst powder loaded with 45 wt% of Pt, and predetermined amounts of ion exchange water, an electrolyte solution (Nafion), ethanol, and propylene glycol were mixed to produce a catalyst ink (Nafion/Carbon weight of 1).
(2) The mixture of (1) was stirred (30 min) using a 28 kHz ultrasonic homogenizer, and then stirred (15 min) using a magnetic stirrer repeatedly 3 times. Then, the catalyst ink was cast (film thickness of 6 mil) on a Teflon® resin membrane, dried, and cut into 13 $cm^2$ squares.
(3) The electrolyte membrane of (2) was hot-pressed to produce a MEA.
(4) The MEA was attached to a cell, and the cell performance was evaluated.

The cell performance evaluation and Pt utilization rate evaluation were carried out in the same manner as in Example 1, except that the humidification temperature was set at 75°C for anode bubbling and 60°C for cathode bubbling.
Further, in Example 4, the MEA was fabricated from a cathode electrode which was produced by subjecting the catalyst ink to ultrasonic irradiation, which had a Pt content of 0.19 ($mg/cm^2$) per electrode unit surface area, and from an anode electrode made from commercially available Pt-loaded carbon.
The results are illustrated in Table 7. From this, it can be seen that compared with the electrode catalyst and MEA using a conventional catalyst ink which was not subjected to the high-frequency ultrasonic irradiation of (1), the electrode catalyst and MEA according to the present invention exhibited high power generation characteristics. Further, compared with the electrode catalyst and MEA using a conventional catalyst ink which was not subjected to the high-frequency ultrasonic irradiation of (1), it can be seen that the electrode catalyst and MEA according to the present invention had a high electrochemical Pt utilization rate. It is believed that the improvement in power generation characteristics was as a result of these effects. Specifically, for carbon loaded with 45 wt% of Pt, the Pt utilization rate with an ultrasonic treatment was 29%, while the Pt utilization rate without such treatment was 25%.

Industrial Applicability

According to the present invention, a method for loading a catalyst for a fuel cell which can suppress a catalyst from being loaded inside the pores of a carrier by a simple method, and which has an increased utilization rate of a noble metal catalyst and improved power generation performance can be obtained. This will contribute to the realization and spread of fuel cells.

## Claims

1. A method for producing an electrode catalyst for a fuel cell, comprising: an immersion step (step A) for immersing one or more selected from a catalyst component, a carrier of conductive particles, and a polymer electrolyte in a solvent; a catalyst loading step (step B) for loading the catalyst component on the carrier; and a reaction site forming step (step C) for depositing the polymer electrolyte onto the catalyst-loaded carrier, the method being **characterized by** irradiating ultrasonic waves in at least one of steps A, B, and C.

2. The method for producing an electrode catalyst for a fuel cell according to claim 1, **characterized in that** in step A, after immersing the carrier in the solvent, ultrasonic waves are irradiated on a dispersion composed of the carrier and the solvent.

3. The method for producing an electrode catalyst for a fuel cell according to claim 1, **characterized in that** in step B, after immersing the catalyst-loaded carrier loaded with the catalyst component in the solvent, ultrasonic waves are irradiated on a dispersion composed of the catalyst-loaded carrier and the solvent.

4. The method for producing an electrode catalyst for a fuel cell according to claim 1, **characterized in that** in step B, while irradiating ultrasonic waves on an electrode catalyst dispersion composed of at least the catalyst component, the carrier, and the solvent, the catalyst component is loaded on the carrier.

5. The method for producing an electrode catalyst for a fuel cell according to claim 1, **characterized in that** in step C, after immersing at least the carrier loaded with the catalyst and a solution of the polymer electrolyte in the solvent to form a catalyst ink, ultrasonic waves are irradiated on the catalyst ink composed of the catalyst-loaded carrier and the solvent.

6. The method for producing an electrode catalyst for a fuel cell according to any of claims 1 to 5, **characterized in that** the pores of the carrier have an average size of 5 nm or less.

7. The method for producing an electrode catalyst for a fuel cell according to any of claims 1 to 6, **characterized in that** the solvent is water and/or an alcohol, and a surfactant.

8. The method for producing an electrode catalyst for a fuel cell according to any of claims 1 to 7, **characterized in that** the frequency of the ultrasonic waves is 20 kHz to 1,000 kHz.

9. The method for producing an electrode catalyst for a fuel cell according to any of claims 1 to 7, **characterized in that** the frequency of the ultrasonic waves is 100 kHz to 500 kHz.

10. The method for producing an electrode catalyst for a fuel cell according to any of claims 1 to 9, **characterized in that** irradiation of the ultrasonic waves is carried out for 30 minutes or more.

11. The method for producing an electrode catalyst for a fuel cell according to any of claims 1 to 10, **characterized in that** the carrier is carbon black.

12. An electrode catalyst for a fuel cell produced by the production method according to any of claims 1 to 11.

13. The electrode catalyst for a fuel cell according to claim 12 having a catalyst layer, which is composed of a carrier loaded with a catalyst and a polymer electrolyte, **characterized in that** the percent decrease in volume of 5 nm or less pores of the carrier loaded with 2 wt% catalyst is 5.0 to 15% with respect to the corresponding pore volume before the catalyst loading.

14. The electrode catalyst for a fuel cell according to claim 12 having a catalyst layer, which is composed of a carrier loaded with a catalyst and a polymer electrolyte, **characterized in that** the percent decrease in specific surface area of the carrier loaded with 2 wt% catalyst is 5.0 to 15% with respect to the corresponding pore volume before the catalyst loading.

15. The electrode catalyst for a fuel cell according to any of claims 12 to 14, **characterized in that** the catalyst is preferentially supported on the surface of the carrier rather than inside the pores of the carrier.

**16.** A catalyst for a cathode electrode comprising the electrode catalyst for a fuel cell according to any of claims 12 to 15.

**17.** A solid polymer fuel cell comprising an anode, a cathode, and a polymer electrolyte membrane provided between the anode and the cathode, **characterized in that** the solid polymer fuel cell comprises the electrode catalyst for a fuel cell described in any of the claims 12 to 15 as the cathode catalyst and/or anode catalyst.

Fig. 1

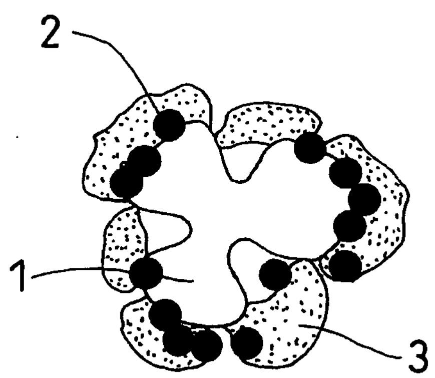

Fig. 2

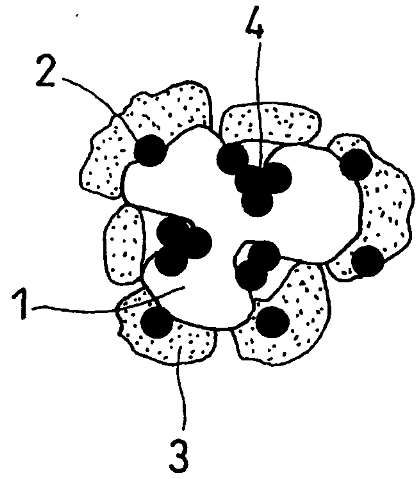

Fig. 3

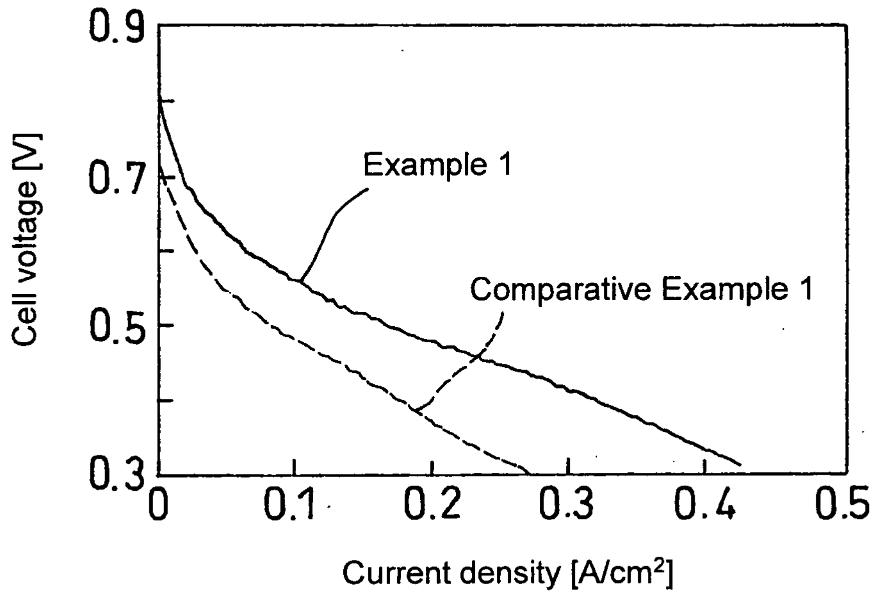
0.9
0.7
0.5
0.3
Cell voltage [V]
Example 1
Comparative Example 1
0
0.1
0.2
0.3
0.4
0.5
Current density [A/cm²]

Fig. 4

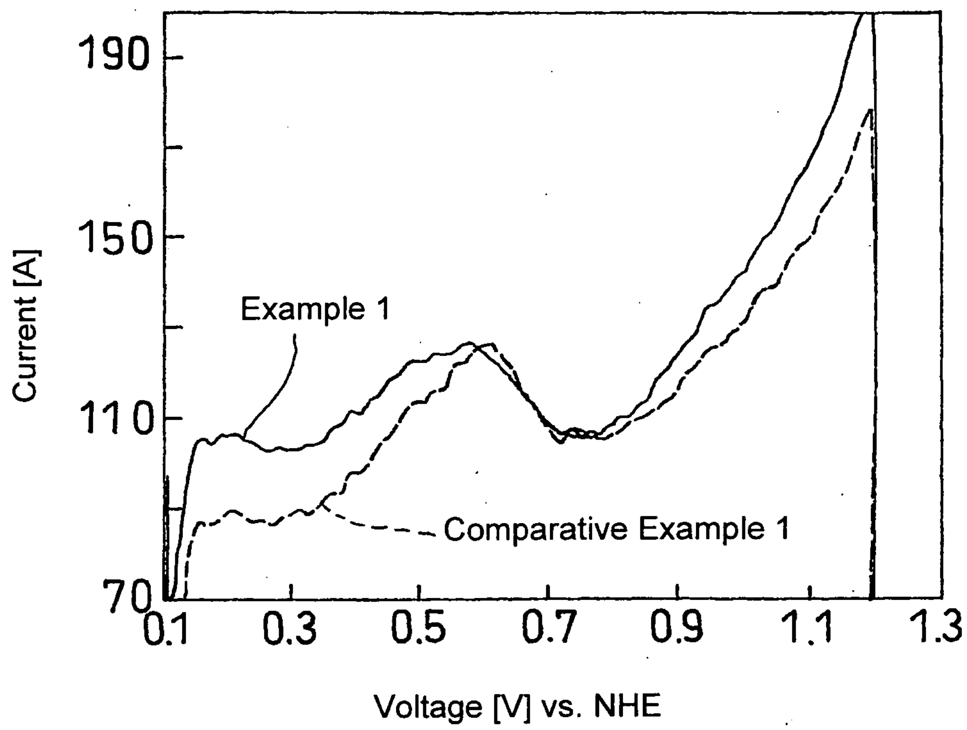
190
150
110
70
Current [A]
Example 1
Comparative Example 1
0.1
0.3
0.5
0.7
0.9
1.1
1.3
Voltage [V] vs. NHE

Fig. 5

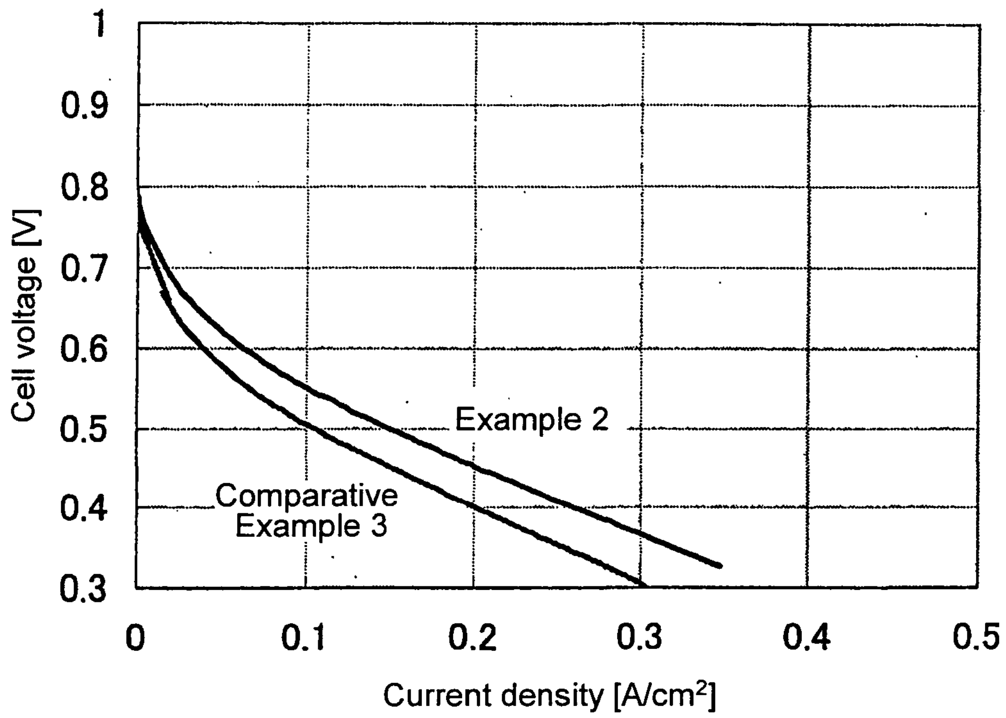
1
0.9
0.8
0.7
0.6
0.5
0.4
0.3
Cell voltage [V]
Example 2
Comparative
Example 3
0
0.1
0.2
0.3
0.4
0.5
Current density [A/cm2]

Fig. 6

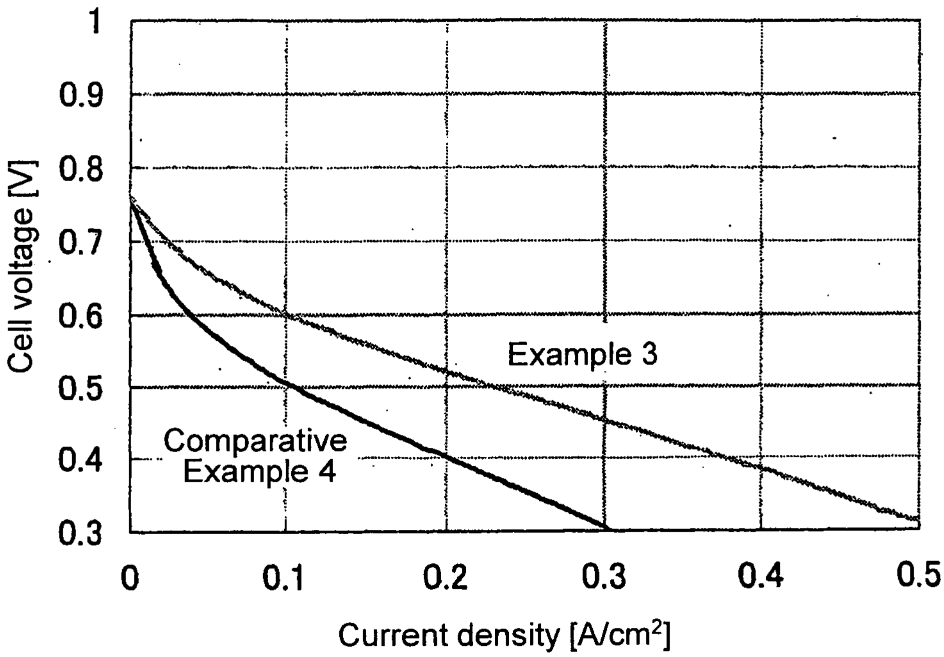
1
0.9
0.8
0.7
0.6
0.5
0.4
0.3
Cell voltage [V]
Example 3
Comparative
Example 4
0
0.1
0.2
0.3
0.4
0.5
Current density [A/cm2]

Fig. 7

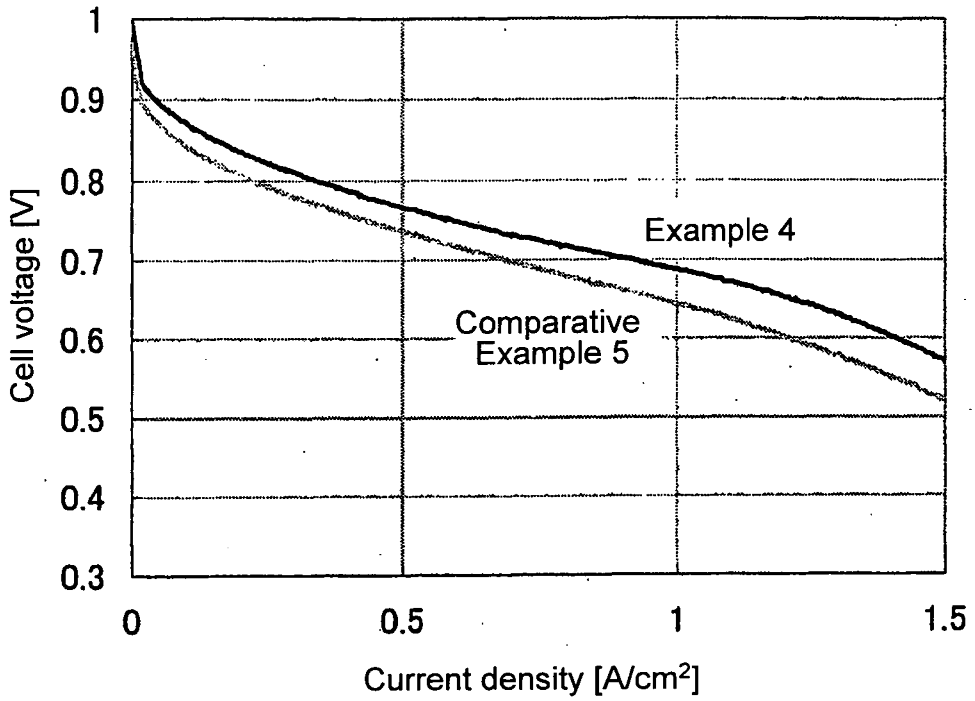
1
0.9
0.8
0.7
0.6
0.5
0.4
0.3
Cell voltage [V]
Example 4
Comparative
Example 5
0
0.5
1
1.5
Current density [A/cm2]

**INTERNATIONAL SEARCH REPORT**

International application No.
PCT/JP2007/062549

A. CLASSIFICATION OF SUBJECT MATTER
*H01M4/88*(2006.01)i, *B01J23/42*(2006.01)i, *B01J37/02*(2006.01)i, *B01J37/34*(2006.01)i, *H01M4/86*(2006.01)i, *H01M4/96*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M4/86-H01M4/98, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-270863 A (Nissan Motor Co., Ltd.), 06 October, 2005 (06.10.05), Par. Nos. [0016], [0022], [0029], [0049], [0057] (Family: none) | 1,4,6-17 |
| X | JP 2006-92957 A (Shinshu University), 06 April, 2006 (06.04.06), Par. Nos. [0036], [0043] (Family: none) | 1,4,6-17 |
| X | JP 10-241703 A (Toyota Motor Corp.), 11 September, 1998 (11.09.98), Par. No. [0030] (Family: none) | 1,4,6-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 August, 2007 (29.08.07) | 11 September, 2007 (11.09.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/062549

C (Continuation). DOCUMENTS CONSIDERED TO BE RELEVANT

| Category* | Citation of document, with indication, where appropriate, of the relevant passages | Relevant to claim No. |
|---|---|---|
| X | JP 2006-97111 A (Matsushita Electric Industrial Co., Ltd.), 13 April, 2006 (13.04.06), Par. Nos. [0015] to [0018] (Family: none) | 1,2,4,6-17 |
| X | JP 11-3715 A (Japan Storage Battery Co., Ltd.), 06 January, 1999 (06.01.99), Par. Nos. [0021] to [0026] (Family: none) | 1,3,5-17 |
| X | JP 2003-115299 A (Toyota Motor Corp.), 18 April, 2003 (18.04.03), Par. Nos. [0044] to [0049] (Family: none) | 1,5-17 |
| X | JP 2005-174786 A (Japan Storage Battery Co., Ltd.), 30 June, 2005 (30.06.05), Par. Nos. [0048] to [0056] (Family: none) | 1,5-17 |
| X | JP 2005-353376 A (Japan Storage Battery Co., Ltd.), 22 December, 2005 (22.12.05), Full text (Family: none) | 1,6-17 |

Form PCT/ISA/210 (continuation of second sheet) (April 2005)

**INTERNATIONAL SEARCH REPORT**

International application No.
PCT/JP2007/062549

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

In order that a group of inventions described in the claims comply with the requirement of unity of invention, a special technical feature for linking the group of inventions so as to form a single general inventive concept should exist. However, matter described in claim 1 is described in a prior art document, for example, JP 2005-270863 A (Nissan Motor Co., Ltd.) 2005.10.06 and thus cannot be a special technical feature.

Therefore, there is no special technical feature among the group of inventions described in claim 1 to 17 for linking the group of inventions so as to form a single general inventive concept. Accordingly, the group of inventions

(continued to extra sheet)

1. ☐ As all required additional search fees were timely paid by the applicant, this international search report covers all searchable claims.
2. ☒ As all searchable claims could be searched without effort justifying an additional fee, this Authority did not invite payment of any additional fee.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.
PCT/JP2007/062549

Continuation of Box No.III of continuation of first sheet(2)

described in claim 1 to 17 do not comply with the requirement of unity of invention.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005190726 A